# EUROPÄISCHE PATENTSCHRIFT

(11) **EP 2 686 995 B1**
(45) Veröffentlichungstag und Bekanntmachung des Hinweises auf die Patenterteilung: **15.11.2017**
(21) Anmeldenummer: 11709877.2
(22) Anmeldetag: 16.03.2011
(51) Int. Cl.: H04M 7/00, H04L 29/06

(54) **VERFAHREN ZUM AUFBAU EINER KOMMUNIKATIONSVERBINDUNG**
METHOD FOR ESTABLISHING A COMMUNICATION SESSION
PROCÉDÉ POUR METTRE EN PLACE UNE CONNEXION DE COMMUNICATION

(43) Veröffentlichungstag der Anmeldung: 22.01.2014
(73) Patentinhaber: Unify GmbH & Co. KG, 80807 München (DE)
(72) Erfinder: TIETSCH, Michael, 86916 Kaufering (DE); KLAGHOFER, Karl, 81373 München (DE); PRANGE, Holger, 81373 München (DE)
(74) Vertreter: Fritzsche, Thomas
(86) Internationale Anmeldenummer: PCT/EP2011/001306
(87) Internationale Veröffentlichungsnummer: WO 2012/123001

(56) Entgegenhaltungen:
- US-A1- 2002 165 966
- US-A1- 2004 109 455
- US-A1- 2010 036 953

## Beschreibung

Die Erfindung betrifft ein Verfahren zum Aufbau einer Kommunikationsverbindung zwischen einem ersten und einem zweiten Telefonie-Endgerät in einem Datenpakete transportierenden Kommunikationsnetz, insbesondere im Internet, mithilfe wenigstens eines Signalisierungsservers, insbesondere mit Hilfe eines SIP-Servers, gemäß dem Oberbegriff des Anspruchs 1.

Derartige Verfahren sind grundsätzlich, insbesondere unter der Bezeichnung Voice over IP (VoIP) bekannt.

So offenbart die DE 102008009925 A1 ein Verfahren und eine Einrichtung zum Verbindungsaufbau für die Internettelefonie unter Nutzung des Session Initiation Protocol (SIP). Danach werden die sonst bei Einrichtungen eines SIP-Providers erfüllten Aufgaben von Einheiten einer dazu speziell ausgebildeten dedizierten Internetverbindungseinrichtung übernommen, welche bei einem im Rahmen der Erfindung zu einer Nutzergruppe gehörenden Teilnehmer angeordnet ist. Diese dedizierte Internetverbindungseinrichtung umfasst insbesondere einen SIP-Registrar, einen SIP-Location-Server sowie einen SIP-Proxy-Server oder einen SIP-Redirect-Server.

Die DE 102006031080 A1 offenbart ein Verfahren zum Bereitstellen von Voice over IP (VoIP) in einem Kommunikationssystem mit einer Vielzahl gemäß VoIP funktionierenden Endgeräten, zwischen denen eine Übertragung von Sprachdaten gemäß VoIP bzw. einer Signalisierung realisiert wird, bei dem die Signalisierung auf Grundlage des Computer Supported Telecommunication Application (CSTA) Schnittstellenstandards erfolgt.

Die US 2004/0109455 A1 offenbart ein Verfahren zur Übertragung von Datenpaketen, bei dem eine QoS-Behandlung der Datenpakete auf der Basis eines QoS-Indikators durchgeführt wird.

Die US 2002/0165966 A1 und die US 2010/0036953 A1 offenbaren ein Verfahren gemäß dem Oberbegriff des Anspruchs 1.

Der vorliegenden Erfindung liegt die Aufgabe zugrunde, ein Verfahren zum Aufbau einer Kommunikationsverbindung zwischen einem ersten und einem zweiten Telefonie-Endgerät in einem Datenpakete transportierenden Kommunikationsnetz anzugeben, mit dem es möglich ist, Datenpakete mit unterschiedlichen Prioritäten in dem Kommunikationsnetz zu übertragen und auf diese Weise einer Datenverbindung die von den Anwendern jeweils benötigte Dienstgüte zur Verfügung stellen zu können.

Diese Aufgabe wird durch ein Verfahren mit den Merkmalen des Anspruchs 1 gelöst. Die Unteransprüche sollen vorteilhafte Weiterbildungen dieser Erfindung unter Schutz stellen.

Erfindungsgemäß ist ein Verfahren zum Aufbau einer Kommunikationsverbindung zwischen einem ersten und einem zweiten Telefonie-Endgerät in einem Datenpakete transportierenden Kommunikationsnetz, insbesondere im Internet vorgesehen, mithilfe wenigstens eines Signalisierungsservers, insbesondere mithilfe eines SIP-Servers, wobei das Verfahren vorzugsweise folgende Schritte und gegebenenfalls weitere Schritte beinhaltet:
a) Das erste Telefonie-Endgerät benachrichtigt einen ersten Signalisierungsserver darüber, dass ein Anruf an das zweite Telefonie-Endgerät erfolgen soll; und
b) der benachrichtigte erste oder ein von diesem ersten Signalisierungsserver benachrichtigter zweiter Signalisierungsserver erkennt, dass der Anruf mit einer bestimmten Dienstgüte durchgeführt werden soll und baut eine dieser Dienstgüte entsprechende Kommunikationsverbindung zwischen dem ersten und dem zweiten Telefonie-Endgerät auf. Erfindungsgemäß ist es außerdem vorgesehen, dass direkt der L3-Dienstgütewert des Differentiated Services Code Point (DSCP), der auch als L3-QoS-Wert bezeichnet wird, signalisiert wird, nicht jedoch der L2-QoS-Wert gemäß IEEE 802.1D. Dies ist mit dem Vorteil verbunden, dass das Telefonie-Endgerät keine lokalen Daten verarbeiten oder speichern muss.

In diesem Zusammenhang ist unter einem Signalisierungsserver ein Vermittlungsdienst in Form eines Servers zu verstehen, bei dem die verwendeten Telefonie-Endgeräte sich anmelden können, sodass der Server die aktuelle IP-Adresse der Telefonie-Endgeräte kennt. Mithilfe dieser IP-Adresse des Telefonie-Endgerätes kann der Signalisierungsserver, beispielsweise ein SIP-Server die Vermittlung von Telefonaten in paketvermittelten Netzwerken, wie beispielsweise in Computernetzwerken übernehmen.

Das Session-Initation-Protocol (SIP) ist ein Netzprotokoll zum Aufbau, zur Steuerung und zum Abbau einer Kommunikationssitzung zwischen zwei oder mehr Telefonie-Endgeräten. Das Protokoll wird unter anderem im RFC 3261 spezifiziert (de.wikipedia.org/wiki/session_initiation_protocol).

In diesem Zusammenhang soll unter dem Begriff der Dienstgüte die Güte eines Kommunikationsdienstes vorzugsweise aus der Sicht der Anwender verstanden werden. Formal ist die Dienstgüte ein Satz von Qualitätsanforderungen an den verwendeten Kommunikationsdienst.

Beispiele für derartige Anforderungen sind der Wunsch des Anwenders, mit dem von ihm gewünschten Ziel verbunden und nach Beendigung der Kommunikation zuverlässig wieder getrennt zu werden, ein rascher Aufbau einer Kommunikationsverbindung, die stabile Aufrechterhaltung einer Kommunikationsverbindung, eine gute Sprachverständlichkeit insbesondere bei Telefonie-Verbindungen, die vollständige Übertragung der Nutzinformation mit einer möglichst geringen Fehlerrate, die Trennung von Informationen anderer Kommunikationsteilnehmer und die weitgehende Abwesenheit von Störungen, die Minimierung von Wartezeiten und die korrekte Abrechnung der Kommunikation entsprechend ihrer Dauer und der Menge der übertragenen Daten.

In paketvermittelten Netzen, wie beispielsweise in IP-Netzen wird die Dienstgüte häufig auch mithilfe von Parametern umfasst, die beispielsweise die sogenannte Latenzzeit, also die Verzögerung der Übertragung von Endgerät zu Endgerät, den sogenannten Jitter, also die Abweichung der Latenzzeit von ihrem Mittelwert und die Paketverlustrate umfassen, also die Wahrscheinlichkeit, dass einzelne IP-Pakete bei der Übertragung verloren gehen oder - insbesondere bei Echtzeit-Diensten, wie Telefonie-Anwendungen - ihr Ziel zu spät erreichen. Daneben wird die Dienstgüte auch vom Durchsatz, d. h. von der Mittel pro Zeiteinheit übertragenen Datenmenge beeinflusst. Bei Echtzeit-Kommunikationsanwendungen, wie beispielsweise der Internet-Telefonie (Voice over IP) beeinflussen die Latenz, der Jitter und die Verlustrate maßgeblich die Sprachverständlichkeit.

Gemäß einer bevorzugten Ausführungsform der Erfindung ist das erfindungsgemäße Verfahren ferner dadurch gekennzeichnet, dass der erste oder der zweite Signalisierungsserver einen der beiden Telefonie-Endgeräte einen der bestimmten Dienstgüte entsprechenden Dienstgüte-Identifikator, vorzugsweise eine Dienstgüte-Profil-ID, oder eine aus diesem Dienstgüte-Identifikator abgeleitete Information, vorzugsweise den entsprechenden Differentiated Services Code Point (DSCP) mitteilt. Das auf diese Weise benachrichtigte Telefonie-Endgerät sendet diesen Dienstgüte-Identifikator oder eine aus diesem Dienstgüte-Identifikator abgeleitete Information, vorzugsweise unter Verwendung des Session Description Protocol (SDP) an das jeweils andere Telefonie-Endgerät. Hierdurch wird dieses andere Telefonie-Endgerät in die Lage versetzt, sich entsprechend dieser Dienstgüte zu konfigurieren.

Das Session Description Protocol (SDP) ist im RFC 4566 spezifiziert. Mit dem Session Description Protocol (SDP) werden Eigenschaften von Multimediadatenströmen beschrieben (de.wikipedia.org/wiki/Session_Description_Protocol).

Es dient dazu, Kommunikationssitzungen zu verwalten, und wird beispielsweise zusammen mit SIP und H.323 in der IP-Telefonie bei der Aushandlung von Codecs, Transportprotokollen und -adressen und zur Übertragung von Metadaten eingesetzt. SDP selbst bietet keinen eigenen Aushandlungsmechanismus, sondern nur eine Beschreibung der Datenströme. Datensätze im SDP-Format können mit verschiedenen Transportprotokollen übertragen werden, z. B. auch mit solchen "Transportprotokollen" wie E-Mail.

Ein Differentiated Services Code Point (DSCP) verweist innerhalb eines als DiffServ bekannten Verfahrens gewöhnlich auf ein Weiterleitungsverhalten (englisch: Perhop behavior, PHB). Dieses spezifiziert, in welcher Weise mit einem Paket verfahren werden soll. DiffServ (kurz für Differentiated Services) ist ein Schema zur Klassifizierung von IP-Paketen (http://de.wikipedia.org/wiki/DSCP). Diese Klassifizierung kann zur Priorisierung von IP-Datenpaketen verwendet werden, um eine Dienstgüte (englisch: Quality of Service, QoS) sicherzustellen. DiffServ wurde erstmals 1998 in der RFC 2474 beschrieben.

Die ursprüngliche Spezifikation von IPv4 in RFC 791 definierte ein Type-of-Service-Byte (ToS-Byte) im IP-Header. Drei Bits kodierten eine Präzedenz zwischen 0 und 7, drei weitere Bits markierten Pakete für geringe Latenz, hohen Durchsatz und hohe Verlässlichkeit. Eine spätere RFC gab einem der verbleibenden Bits die Bedeutung "minimiere finanzielle Kosten".

DiffServ beschreibt ein alternatives Verfahren, um die Bits des ToS-Bytes zu nutzen: Die ursprünglichen sechs Bits (nun "DS-Feld" genannt) kodieren einen Differentiated Services Codepoint (DSCP) zwischen 0 und 63. Die verbleibenden zwei Bit werden in RFC 3168 für Explicit Congestion Notification (ECN) verwendet.

DSCPs dienen gewöhnlich der Klassifizierung, nicht aber der Priorisierung. Das heißt, dass ein höherer Zahlenwert nicht unbedingt einer bevorzugten Behandlung entspricht. Dabei ist es gewöhnlich beabsichtigt, an den Grenzen eines Netzwerks, zum Beispiel auf sogenannten Border-Routern, eine Klassifizierung der Pakete vorzunehmen, beispielsweise anhand von Portnummern. Router innerhalb des Netzwerkes nutzen hingegen lediglich das DS-Feld, um ein PHB auszuwählen.

In mehreren RFCs werden Weiterleitungsverhalten (PHBs) definiert, die für verschiedene Arten von Netzwerkverkehr und Ressourcenverwaltung geeignet sind. Die entsprechenden DSCPs werden von der IANA verwaltet und zugeteilt. Die Class Selector PHBs (RFC 2474) sind rückwärtskompatibel zu den acht Präzedenzwerten aus RFC 791 und sind Vertreter einer prioritätsbasierten Ressourcenverteilung. Expedited Forwarding (EF, RFC 3246) beschreibt ein Verhalten für Pakete, die eine geringe Latenz benötigen. Assured Forwarding (AF, RFC 2597) beschreibt ein PHB, das Pakete in vier Klassen mit je drei Prioritäten aufteilt. Das Standardverhalten mit dem Codepoint 0 wird Best Effort (BE) genannt.

Gemäß einer weiteren bevorzugten Ausführungsform der Erfindung, die auch mit anderen Ausführungsformen kombiniert werden kann, ist ein Verfahren vorgesehen, bei dem wenigstens ein erstes Datenpaket den Rahmen der aufgebauten Kommunikationsverbindung entsprechend einer ersten Dienstgüte übertragen wird, die verschieden ist von einer zweiten Dienstgüte, entsprechend welcher wenigstens ein zweites Datenpaket im Rahmen der aufgebauten Kommunikationsverbindung übertragen wird.

Mithilfe dieser und weiterer Ausführungsformen der Erfindung ist es möglich, eine bestimmte, angeforderte Dienstgüte (Quality of Service QoS) in paketvermittelten Kommunikationsnetzen, insbesondere in IP-Netzen bereitzustellen und zu nutzen, sodass ein möglichst störungsfreier Betrieb der Internet-Telefonie auf Voice over IP, VoIP möglich ist. Dabei können einzelne Datenpakete mit einer höheren Priorität übermittelt werden, als andere Datenpakete, wodurch sichergestellt werden kann, dass in Echtzeit zu übertragende Daten (Real-Time Media-Daten) mit einer möglichst geringen Verzögerung, mit kleinem Jitter und mit niedrigem Paketverlust das Kommunikationsnetz passieren und den Kommunikationspartner erreichen können.

Gemäß einer weiteren bevorzugten Ausführungsform der Erfindung, deren Merkmale auch mit Merkmalen anderer Ausführungsformen kombiniert werden können, ist es vorgesehen, dass wenigstens ein erstes Datenpaket im Rahmen der aufgebauten Kommunikationsverbindung entsprechend einem ersten Wert des Differentiated Services Code Point (DSCP) übertragen wird, der verschieden ist von einem zweiten Wert des Differentiated Services Code Point (DSCP), entsprechend welchem wenigstens ein zweites Datenpaket im Rahmen der aufgebauten Kommunikationsverbindung übertragen wird.

Gemäß einer weiteren bevorzugten Ausführungsform der Erfindung, deren Merkmale auch mit Merkmalen anderer Ausführungsformen der Erfindung kombiniert werden können, ist es vorgesehen, dass wenigstens ein Signalisierungsserver einem Telefonie-Endgerät, welchem dieser Signalisierungsserver zugeordnet ist, einen Dienstgüte-Identifikator oder eine entsprechende, eine Dienstgüte bezeichnende Information, vorzugsweise mit Hilfe einer Signalisierung nach dem Session Description Protocol (SDP) mitteilt.

Gemäß einer weiteren bevorzugten Ausführungsform der Erfindung, deren Merkmale auch mit Merkmalen anderer Ausführungsformen der Erfindung kombiniert werden können, ist es vorgesehen, dass wenigstens ein erstes Telefonie-Endgerät wenigstens einem zweiten Telefonie-Endgerät einen Dienstgüte-Identifikator oder eine entsprechende, eine Dienstgüte bezeichnende Information vorzugsweise mithilfe einer Signalisierung nach dem Session Description Protocol (SDP) mitteilt.

Gemäß einer weiteren bevorzugten Ausführungsform der Erfindung, deren Merkmale auch mit Merkmalen anderer Ausführungsformen der Erfindung kombiniert werden können, ist es vorgesehen, dass anstelle wenigstens eines Dienstgütewertes des Differentiated Services Code Point (DSCP) ein vorzugsweise numerischer oder alphanumerischer Identifikator übergeben wird, mit dessen Hilfe wenigstens ein zu verwendender Dienstgütewert in einem Telefonie-Endgerät ermittelt wird, an welches ein Identifikator übergeben wird oder wurde. Obwohl bei derartigen Ausführungsformen der Erfindung die Speicherung und Verarbeitung geringer Datenmengen (siehe beispielsweise Tabelle 1 weiter unten) im Endgerät erforderlich sein wird, ist diese Ausführungsform der Erfindung mit dem Vorteil verbunden, dass lokale Einstellungen gemäß den Vorgaben der Anwender regelmäßig erfüllt werden können, was diese Lösung besonders attraktiv erscheinen lässt.

Eine Profil-ID, beispielsweise die "5", die beispielsweise für "allerhöchste Priorität" stehen kann, kann von Ende zu Ende signalisiert werden. Welche konkreten L2/L3-Werte dazu aber in den verschiedenen durchlaufenden Netzabschnitten (administrative Domains, wie zum Beispiel der "Firma 1", "Provider X", "Firma 2") zu verwenden sind, um die höchste Priorität zu erreichen, kann man außerhalb einer solchen Domain nicht sehen und daher auch nicht vorgeben. Wenn also beispielsweise Teilnehmer A dem Teilnehmer B mitteilt, dass eine Nachricht oder ein einzelnes Paket gemäß der Profil-ID "5" zu übertragen ist, wird einfach in jedem Netzabschnitt mit den L2/L3-Werten gearbeitet, die gemäß lokaler Vorgabe in der Profil-Tabelle der jeweiligen Domain (die oben erwähnte "geringe Datenmenge") unter Profil "5" hinterlegt sind.

Vorzugsweise werden dazu Signalisierungsprotokolle, besonders vorzugsweise das Session Initiation Protocol (SIP) und das Session Descripton protocol (SDP) derart erweitert, dass es möglich wird, explizit ein Dienstgüte-Profil zu aktivieren und/oder dem Kommunikationspartner - auch über administrative Grenzen hinweg - bestimmte L2/L3-Dienstgüte-Werte vorzuschlagen oder zu fordern. Diese Vorgehensweise ist auch auf andere Protokolle, wie beispielsweise auf das H.323-Protokoll, übertragbar. In diesem Zusammenhang sollen Medientypen wie Video (VVoIP) oder weitere, auch künftige Medientypen eingeschlossen sein, wenn abkürzend der Einfachheit halber nur von Voiceover-IP (VoIP) gesprochen wird.

Ein Dienstgüte-Profil besteht vorzugsweise aus L2-Dienstgüte-Werten (IEEE802.1D) und L3-Dienstgüte-Werten (DSCP). Mehrere dieser Profile, beispielsweise 5, können im Endgerät vorzugsweise in einer Tabelle hinterlegt und dann über eine in der SIP- bzw. SDP-Nachricht übermittelte Dienstgüte-Profil-ID ausgewählt werden. Eine solche Tabelle kann beispielsweise wie folgt aussehen:

**Tabelle 1: Beispiel-Tabelle zur Hinterlegung von Profilen im Endgerät**

| **ID** | **L2/IEEE802.1D** | **L3/DSCP** |
|---|---|---|
| 0 | 0 | 0 |
| 1 | 4 | 34 |
| 2 | 5 | 40 |
| ... | ... | ... |

Im Rahmen der SIP-Signalisierung kann dem Endgerät vom SIP-Server das zu benutzende Profil durch Übermittlung der Profil-ID (zum Beispiel "2") mitgeteilt werden.

Den zugehörigen L2-Wert (hier "5") nutzt das Endgerät direkt an seinem Ethernet-Interface, damit die L2-SIP-Server die Pakete (MAC-Frames) prioritätsmäßig richtig verarbeiten können.

Den zugehörigen L3-Wert (hier "40") dagegen nutzt das Endgerät in den RTP-IP-Paketen auf L3, damit die Router die Pakete (IP) prioritätsmäßig richtig verarbeiten können und signalisiert diesen Wert ggf. per SDP seinem Kommunikationspartner (im Falle der bereits beschriebenen direkten Wertübergabe).

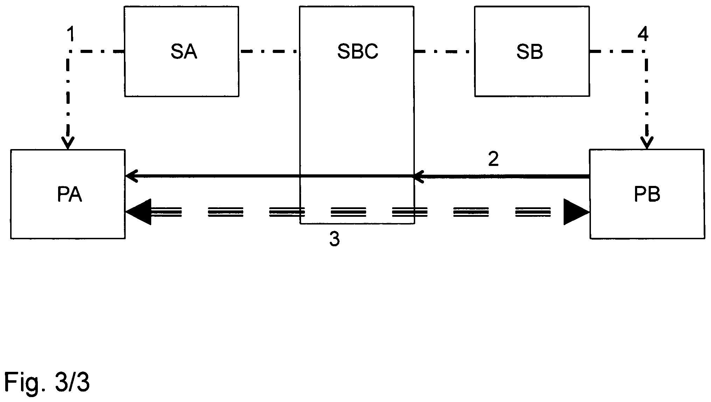

Diese Vorgehensweise hat im Gegensatz zum direkten signalisieren der L2/L3-Werte den Vorteil, dass ein logischer Wert übermittelt wird, der erst im Endgerät, oder im Falle von Domain-Grenzen auch im SBC (siehe Figur 3), gemäß den dort (im jeweiligen Sub-Netz) geltenden Regeln ("Policies") in Dienstgüte-Werte umgesetzt wird. Der L2-Wert hat nur lokale Bedeutung. In verschiedenen Sub-Netzen können daher unterschiedliche Werte (bis hin zu "kein L2-Dienstgütewert") gefordert werden. Aus diesem Grund sollte die oben gezeigte Tabelle auch durch einen Administrator modifizierbar sein, wenngleich sich standardisierte Profile für den Regelbetrieb und als Administrationsvorlage anbieten.

Gemäß einer weiteren bevorzugten Ausführungsform der Erfindung, deren Merkmale auch mit Merkmalen anderer Ausführungsformen der Erfindung kombiniert werden können, ist es vorgesehen, dass wenigstens ein Signalisierungsserver aufgrund einer gewählten Rufnummer oder aufgrund einer besonderen Signalisierung erkennt, dass ein Anruf mit einer besonderen Priorität ausgeführt werden soll, und dass daraufhin dieser Signalisierungsserver dem den Anruf initiierenden Telefonie-Endgerät einen entsprechenden Dienstgüte-Profil-Identifikator oder eine entsprechende Information mitteilt.

Gemäß einer weiteren bevorzugten Ausführungsform der Erfindung, deren Merkmale auch mit Merkmalen anderer Ausführungsformen der Erfindung kombiniert werden können, ist es vorgesehen, dass das Telefonie-Endgerät aus dem ihm mitgeteilten Dienstgüte-Profil einen zu verwendenden Dienstgüte-Wert ermittelt und für eine Verbindung nach dem Real-Time Transport Protocol (RTP) verwendet.

Im Folgenden wird die Erfindung anhand bevorzugter Ausführungsbeispiele und mithilfe der Figuren näher beschrieben.

Dabei zeigt
Figur 1 in schematischer Weise einen erfindungsgemäßen Verbindungsaufbau gemäß einer ersten bevorzugten Ausführungsform der Erfindung;
Figur 2 in schematischer Weise einen erfindungsgemäßen Verbindungsaufbau gemäß einer zweiten bevorzugten Ausführungsform der Erfindung;
Figur 3 in schematischer Weise einen erfindungsgemäßen Verbindungsaufbau gemäß einer dritten bevorzugten Ausführungsform der Erfindung.

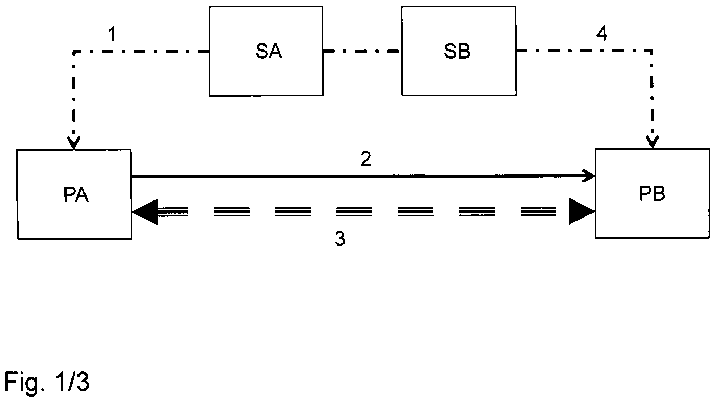

Wie in Figur 1 schematisch gezeigt wird, findet ein Verbindungsaufbau zwischen einem ersten Telefonie-Endgerät (PA) und einem zweiten Telefonie-Endgerät (PB) mithilfe zweier Signalisierungsserver (SA, SB) statt. Gemäß einem ersten Ausführungsbeispiel der Erfindung teilt der Signalisierungsserver SA, vorzugsweise ein SIP-Server, sobald dieser Signalisierungsserver (SA) auf der Seite des Telefonie-Endgerätes PA erkennt, dass der aufzubauende Anruf mit einer besonderen Priorität ausgeführt werden soll, dem den Anruf initiierenden Endgerät PA über eine VoIP-Signalisierung die zugehörige Dienstgüte-Profil-ID, in diesem Beispiel "qos_profile=2" mit 1. Nach einer Umsetzung der Profil-ID in konkrete Dienstgüte-Werte, welche das Telefonieendgerät PA vorzugsweise für seine RTCP-Verbindung 3 einsetzt, teilt das Telefonie-Endgerät PA dem Telefonie-Endgerät PB vorzugsweise den zu benutzende L3-QoS-Wert über das Service Description Protocol (SDP) mit 2, wodurch nun beide Verbindungsrichtungen mit den speziellen Dienstgüte-Einstellungen versehen sind.

Bei einem weiteren bevorzugten Ausführungsbeispiel wertet das Telefonieendgerät PA die vom Signalisierungsserver SA empfangene 1 Profile-ID aus und übergibt anschließend nicht die Profile-ID seinem Kommunikationspartner, sondern übermittelt 2 direkt den resultierenden DSCP-Wert, in dem Beispiel der Tabelle 1 den Wert "dscp=40".

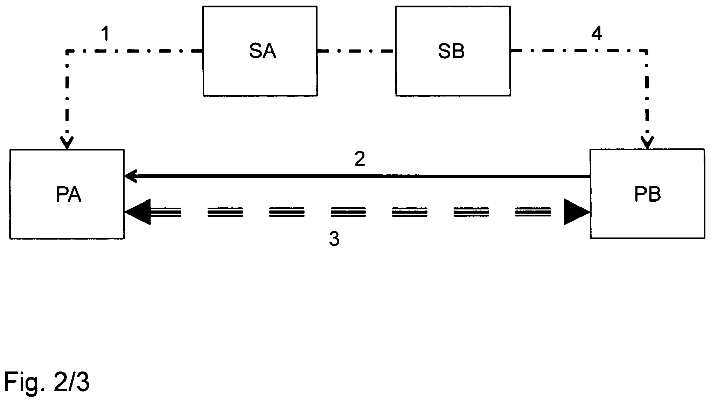

Falls ein Signalisierungsserver, beispielsweise eine SIP-Server auf der Seite des Telefonie-Endgerätes PA, eine Erkennung spezieller Rufe nicht unterstützt, oder falls beispielsweise durch eine Anrufumleitung der Server auf der Seite des Telefonie-Endgerätes PA einen Notruf nicht erkennen kann, ist gemäß einem weiteren, in Figur 2 schematisch gezeigten Ausführungsbeispiel der Erfindung vorgesehen, dass der Signalisierungsserver SB auf Seiten des Telefonie-Endgerätes PB eine Prioritätsveränderung bewirkt. Dies kann vorzugsweise dadurch geschehen, dass der Signalisierungsserver SB auf Seiten des Telefonie-Endgerätes PB diesem Telefonie-Endgerät PB eine Dienstgüte-Profil-ID mitgibt 4. Das Telefonie-Endgerät PB wertet diese Dienstgüte-Profil-ID aus, indem es vorzugsweise die Werte selbst verwendet, und teilt die Dienstgüte-Profil ID, oder eine entsprechende Information, beispielsweise den L3/DSCP-Wert dem Telefonie-Endgerät PA mit.

Diese Ausführungsform der Erfindung ist in manchen Notruf-Szenarien besonders interessant, weil nur in der Notrufzentrale eine Hochschaltung der Priorität veranlasst werden muss. Alle Anrufer-Endgeräte können aufgrund des übermittelten Dienstgüte-Wertes automatisch der neuen Einstellung folgen.

Für den Fall, dass das Telefonieendgerät PA eine Dienstgüte Einstellung über das Service des Service Description Protocol (SDP) nicht unterstützt, kann es vorzugsweise mit derjenigen Dienstgüte-Einstellung arbeiten, dieses ohnehin verwenden würde. Das bedeutet, dass diese Lösung voll rückwärts kompatibel ist. Eine durch die Erfindung angestrebte Qualitätsverbesserung käme dann zwar nicht zum Tragen; die Verbindung würde jedoch auch in diesem Fall wenigstens nicht nachteilig beeinflusst werden.

Bei einigen Anwendungsszenarien, kommt ein Ausführungsbeispiel zum Einsatz, wie es in der Figur 3 schematisch dargestellt ist. Bei diesen Anwendungsszenarien werden in den IP-Meldungen enthaltene DSCP-Werte oft an administrativen Grenzen (zum Beispiel beim Übergang von einem Unternehmensnetz in ein Provider-Netz) verworfen und gemäß den lokalen Regeln (den sog. Policies) neu gesetzt. Möglicherweise vorhandenes Wissen über Notrufe geht in solchen Fällen verloren. Eine explizite Signalisierung der Dienstgüte-Profil-ID, die vorzugsweise mit für eine Signalisierung üblichen und dem Fachmann bekannten Mitteln gegen eine Manipulation abgesichert ist, kann hier bewirken, dass auch über diese Grenzen hinweg eine Dienstgüte-Prioritätsänderung wirkt. Dies kann beispielsweise durch eine Auswertung der Dienstgüte-Angaben in der SDP-Signalisierung in den Session Border Controller an (SBC) geschehen.

Auch dieses Ausführungsbeispiel ist mit wieder dem Vorteil der Rückwärtskompatibilität verbunden. Für den Fall, dass der SBC die Dienstgüte-Einstellung über SDP nicht unterstützt, würde er mit den Dienstgüte-Einstellungen arbeiten, die er ohnehin verwenden würde. Das bedeutet zwar, dass diese Lösung voll rückwärts kompatibel ist. Die erfindungsgemäße Qualitätsverbesserung käme dann zwar nicht zum Tragen, aber die Verbindung würde auch nicht nachteilig beeinflusst werden.

Eine Erweiterung des Session Initiation Protocol (SIP) zum Übermitteln der Dienstgüte-Profil-ID von einem SIP-Server zu einem Endgerät kann vorzugsweise erfolgen, indem dem SDP-Body einer SIP-Nachricht ein weiteres Attribut hinzugefügt wird. Dieses Attribut wird im Rahmen dieser Beschreibung "qos_profile" genannt. Es zeigt dem Empfänger dieser Nachricht an, möglichst die unter der ID "2" hinterlegten L2/L3-Dienstgüte Werte für den zu sendenden Medienstrom zu verwenden. Wenn beispielsweise das Telefon auf der Seite des Teilnehmers A dem Telefon auf der Seite des Teilnehmers B mitteilt, einen qos_profile=2 zu verwenden, bedeutet dies, dass A diesen Wert für seinen Media Strom an B verwenden wird, und dass B, wenn möglich und wenn dieses Attribut verstanden wird, auch die entsprechenden Werte für seinen Media Strom an A zu verwenden hat.

Die Protokolle SIP und SDP sind so konzipiert, dass Informationen, die nicht verstanden werden, einfach ignoriert werden können. Deshalb ist dieses vorgeschlagene Verfahren auch rückwärts-kompatibel und für Endgeräte geeignet, die diese vorgeschlagene Erweiterung nicht verstehen.

Das SDP- Attribut kann sowohl auf Session-Level als auch auf Media-Level angegeben werden. Falls es auf Session-Level angegeben ist, soll dieses für alle vorgeschlagenen Media-Ströme gelten. Falls es auf Media-Level angegeben ist, soll es nur für den betreffenden Media-Strom gelten. Somit wäre es möglich, für unterschiedliche Media Ströme auch unterschiedliche L2/L3-Dienstgütewerte zu verwenden. Zum Beispiel könnte man auf diese Weise auf Media-Level einem Media-Strom für Sprache eine höhere Priorität und einem zugehörigen Video-Media-Strom einen normalen Dienstgüte-Level zuweisen, da die ungestörte Sprachübertragung in der Regel wichtiger ist als ein störungsfreies Video.

Die ABNF-Notation von SDP-Attributen ist laut RFC4566:

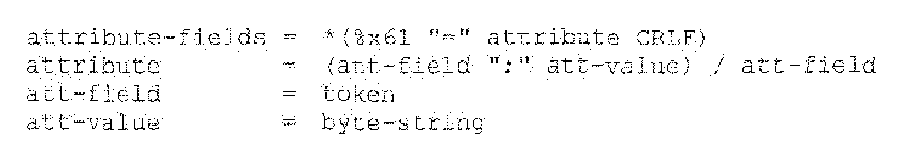

Gemäß einer bevorzugten Ausführungsform dieser Erfindung wird folgende ABNF-Notation für das SDP- Attribut vorgeschlagen:

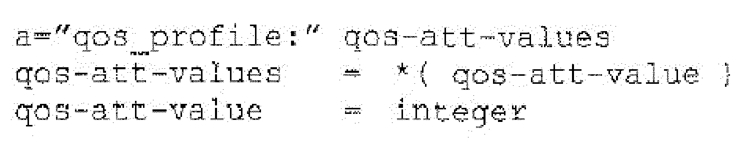

Eine Erweiterung des Session Description Protocol für die Übermittlung der Dienstgüte Profil-ID an einen Kommunikationspartner kann vorzugsweise dadurch erfolgen, dass der L3-Wert, welcher potenziell Ende-zu Ende-Bedeutung hat den Kommunikationspartner und gegebenenfalls allen dazwischen liegenden an der Nutzlast beteiligten Entitäten (wie zum Beispiel SBCs) explizit per Signalisierung mitgeteilt wird. Auf diesem Weg kann die Verwendung eines bestimmten L3/DSCP- wertes für den auszuhandelnden Datenstrom gefordert werden.

Bisher schon werden im so genannten Session Description Protocoll (SDP) Parameter für den Datenstrom ausgehandelt. Dazu zählen die zu verwendenden Codecs, einschließlich der Codec-Parameter), IP-Adressen, Ports und ein paar weitere Informationen, bisher allerdings keine Daten, die mit der Dienstgüte zu tun haben.

Im Rahmen eines bevorzugten Ausführungsbeispiel dieser Erfindung wird nun vorgeschlagen, im SDP-Body einen neuen SDP-Parameter

```
 "a=qos_profile:<qos_profile>"
```

einzuführen. Dieser SDP-Body teilt dem Empfänger des SDP-Bodies mit,
- welcher Codec zu verwenden ist und zu
- welcher IP-Adresse und
- welchem Port mit
- welchem Dienstgüte-Profil
der Media Strom zu senden ist.

Welcher Dienstgüte-Wert hier vom sendenden Endgerät einzusetzen ist, wurde dem Endgerät entweder auf dem oben gezeigten Weg vom SIP-Server per Dienstgüte-Profil-ID mitgeteilt oder aufgrund fest codierter Regeln (bzw. Standard-Dienstgüte Profil) ermittelt (Standard VoIP Call).

Die Signalisierung könnte im Rahmen eines entsprechend erweiterten Session Initiation Protocol wie folgt aussehen: 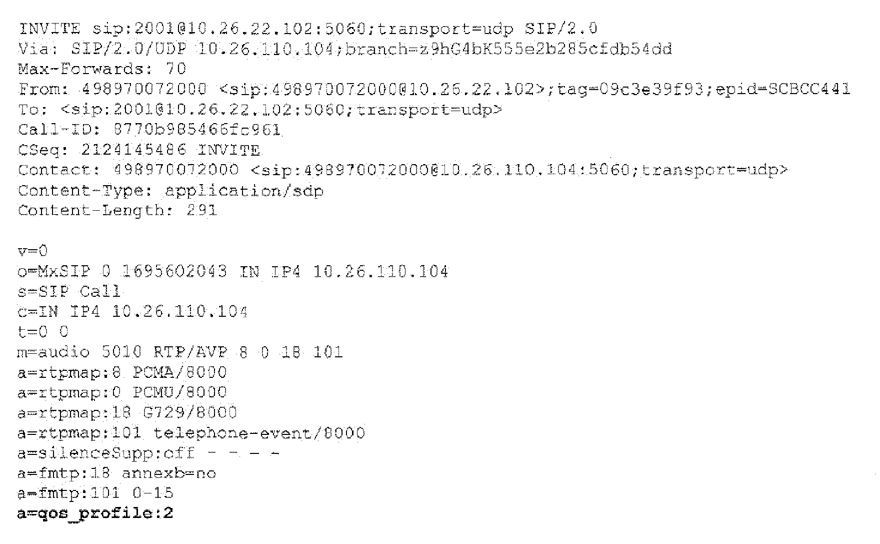 in diesem Legalisierungsbeispiel ist ersichtlich, dass den Kommunikationspartner vorgeschlagen wird, für diesen Ruf und für diesen Media Strom gemäß Dienstgüteprofil "2" den DSCP-Wert "40" zu verwenden. Der vorliegenden Erfindung geht es dabei nicht um die Aushandlung eines Dienstgütemechanismus, sondern um die Festlegung eines bestimmten, für einen bestimmten Anruf (Call) geltenden Dienstgütewertes über die Signalisierung. Die Erfindung ermöglicht in diesem Zusammenhang insbesondere die explizite Signalisierung der Dienstgüte-Einstellungen, wie beispielsweise der Profil-ID oder der DSCP-Werte für einen bestimmten Media-Strom.

## Patentansprüche

1. Verfahren zum Aufbau einer Kommunikationsverbindung zwischen einem ersten und einem zweiten Telefonie-Endgerät (PA, PB) in einem Datenpakete transportierenden Kommunikationsnetz mit Hilfe wenigstens eines Signalisierungsservers (SA, SB), mit folgenden Schritten:
a) das erste Telefonie-Endgerät benachrichtigt einen ersten Signalisierungsserver darüber, dass ein Anruf an das zweite Telefonie-Endgerät erfolgen soll; und
b) der benachrichtigte erste oder ein vom diesem ersten Signalisierungsserver benachrichtigter zweiter Signalisierungsserver erkennt, dass der Anruf mit einer bestimmten Dienstgüte durchgeführt werden soll und baut eine dieser Dienstgüte entsprechende Kommunikationsverbindung zwischen dem ersten und dem zweiten Telefonie-Endgerät auf;
**dadurch gekennzeichnet, dass** der L3-Dienstgütewert des Differentiated Services Code Point, DSCP, direkt signalisiert wird, nicht jedoch der L2-QoS-Wert gemäß IEEE 802.1D.

2. Verfahren nach Anspruch 1, **dadurch gekennzeichnet, dass** der erste oder der zweite Signalisierungsserver einem der beiden Telefonie-Endgeräte einen der bestimmten Dienstgüte entsprechenden Dienstgüte-Identifikator oder eine aus diesem Dienstgüte-Identifikator abgeleitete Information mitteilt, welchen das auf diese Weise benachrichtigte Telefonie-Endgerät an das jeweils andere Telefonie-Endgerät sendet, und welcher dieses andere Telefonie-Endgerät in die Lage versetzt, sich entsprechend dieser Dienstgüte zu konfigurieren.

3. Verfahren nach Anspruch 2, **dadurch gekennzeichnet, dass** wenigstens ein erstes Datenpaket im Rahmen der aufgebauten Kommunikationsverbindung entsprechend einer ersten Dienstgüte übertragen wird, die verschieden ist von einer zweiten Dienstgüte, entsprechend welcher wenigstens ein zweites Datenpaket im Rahmen der aufgebauten Kommunikationsverbindung übertragen wird.

4. Verfahren nach Anspruch 3, **dadurch gekennzeichnet, dass** wenigstens ein erstes Datenpaket im Rahmen der aufgebauten Kommunikationsverbindung entsprechend einem ersten Wert des Differentiated Services Code Point, DSCP, übertragen wird, der verschieden ist von einem zweiten Wert des Differentiated Services Code Point, DSCP, entsprechend welchem wenigstens ein zweites Datenpaket im Rahmen der aufgebauten Kommunikationsverbindung übertragen wird.

5. Verfahren nach einem der vorhergehenden Ansprüche, **dadurch gekennzeichnet, dass** wenigstens ein Signalisierungsserver einem Telefonie-Endgerät, welchem dieser Signalisierungsserver zugeordnet ist, einen Dienstgüte-Identifikator oder eine entsprechende, eine Dienstgüte bezeichnende Information, mitteilt.

6. Verfahren nach einem der vorhergehenden Ansprüche, **dadurch gekennzeichnet, dass** wenigstens ein erstes Telefonie-Endgerät wenigstens einem zweiten Telefonie-Endgerät einen Dienstgüte-Identifikator oder eine entsprechende, eine Dienstgüte bezeichnende Information, mitteilt.

7. Verfahren nach einem der vorhergehenden Ansprüche, **dadurch gekennzeichnet, dass** anstelle wenigstens eines Dienstgütewertes des Differentiated Services Code Point, DSCP, ein numerischer oder alphanumerischer Identifikator übergeben wird, mit dessen Hilfe wenigstens ein zu verwendender Dienstgütewert in einem Telefonie-Endgerät ermittelt wird, an welches ein Identifikator übergeben wird oder wurde.

8. Verfahren nach einem der vorhergehenden Ansprüche, **dadurch gekennzeichnet, dass** wenigstens ein Signalisierungsserver aufgrund einer gewählten Rufnummer oder aufgrund einer besonderen Signalisierung erkennt, dass ein Anruf mit einer besonderen Priorität ausgeführt werden soll, woraufhin dieser Signalisierungsserver dem den Anruf initiierenden Telefonie-Endgerät einen entsprechenden Dienstgüte-Profil-Identifikator oder eine entsprechende Information mitteilt.

9. Verfahren nach Anspruch 8, **dadurch gekennzeichnet, dass** das Telefonie-Endgerät aus dem ihm mitgeteilten Dienstgüte-Profil-einen zu verwendenden Dienstgütewert ermittelt und für eine Verbindung nach dem Real-Time Transport Protocol, RTP, verwendet.

## Claims

1. A method for establishing a communication session between a first and a second telephony terminal (PA, PB) in a communication network transporting data packets with the aid of at least one signaling server (SA, SB), with the following steps:
a) the first telephony terminal informs a first signaling server that a call to the second telephony terminal is to take place; and
b) the informed first or a second signaling server informed by this first signaling server recognizes that the call is to be put through with a certain quality of service and establishes a communication session corresponding to this quality of service between the first and the second telephony terminal;
**characterized in that** the L3 quality of service value of the Differentiated Services Code Point, DSCP, is directly signaled but not, however, the L2-QoS value according to LEEE 802.1D.

2. The method according to Claim 1, **characterized in that** the first or the second signaling server communicates to one of the two telephony terminals a quality of service identifier corresponding to the determined quality of service or communicates information derived from this quality of service identifier which the telephony terminal informed in this manner sends to the particular other telephony terminal, and which puts this other telephony terminal in the position of configuring itself according to this quality of service.

3. The method according to Claim 2, **characterized in that** at least one first data packet is transmitted in the framework of the established communication session according to a first quality of service which is different from a second quality of service according to which at least one second data packet is transmitted in the framework of the established communication session.

4. The method according to Claim 3, **characterized in that** at least one first data packet is transmitted in the framework of the established communication session according to a first value of the Differentiated Services Code Point, DSCP, which is different from a second value of the Differentiated Services Code Point, DSCP, according to which at least one second data packet is transmitted in the framework of the established communication session.

5. The method according to one of the previous claims, **characterized in that** at least one signaling server communicates a quality of service identifier or corresponding information designating a quality of service to a telephony terminal which is associated with this signaling server.

6. The method according to one of the previous claims, **characterized in that** at least one first telephony terminal communicates a quality of service identifier or corresponding information designating a quality of service to at least one second telephony terminal.

7. The method according to one of the previous claims, **characterized in that** instead of at least one quality of service value of the Differentiated Services Code Point, DSCP, a numeric or alphanumeric identifier is transmitted with the aid of which at least one quality of service value to be used is determined in a telephony terminal to which an identifier is or was transmitted.

8. The method according to one of the previous claims, **characterized in that** at least one signaling server recognizes based on a dialed call number on based on a special signaling that a call is to be carried out with a special priority, whereupon this signaling server communicates a corresponding quality of service profile identifier or corresponding information to the telephony terminal initiating the call.

9. The method according to Claim 8, **characterized in that** the telephony terminal determines a quality of service value to be used from the quality of service profile communicated to it and uses it for a session according to the Real Time Transport Protocol, RTP.

## Revendications

1. Procédé pour établir une connexion de communication entre un premier et un second terminal de téléphonie (PA, PB) dans un réseau de communication transportant des paquets de données à l'aide d'au moins un serveur de signalisation (SA, SB), avec les étapes suivantes :
a) le premier terminal de téléphonie informe un premier serveur de signalisation qu'un appel à destination du second terminal de téléphonie doit avoir lieu ; et
b) le premier serveur de signalisation informé ou un second serveur de signalisation informé par ce premier serveur de signalisation, reconnaît que l'appel doit être passé avec une qualité de service déterminée et établit une connexion de communication correspondant à cette qualité de service entre le premier et le second terminal de téléphonie ;
**caractérisé en ce que** la valeur de qualité de service L3 du Differentiated Services Code Point, DSCP, est signalée directement, et non la valeur de QoS L2 selon IEEE 802.1D.

2. Procédé selon la revendication 1, **caractérisé en ce que** le premier ou le second serveur de signalisation communique à un des deux terminaux de téléphonie un identifiant de qualité de service correspondant à la qualité de service déterminée ou une information dérivée de cet identifiant de qualité de service, que le terminal de téléphonie informé de cette manière envoie à l'autre terminal de téléphonie respectif, et qui place cet autre terminal de téléphonie dans la situation de se configurer d'une manière correspondant à cette qualité de service.

3. Procédé selon la revendication 2, **caractérisé en ce qu'**au moins un premier paquet de données est transmis dans le cadre de la connexion de communication établie selon une première qualité de service qui est différente d'une seconde qualité de service selon laquelle au moins un second paquet de données est transmis dans le cadre de la connexion de communication établie.

4. Procédé selon la revendication 3, **caractérisé en ce qu'**au moins un premier paquet de données est transmis dans le cadre de la connexion de communication établie selon une première valeur du Differentiated Services Code Point, DSCP, qui est différente d'une seconde valeur du Differentiated Services Code Point, DSCP, selon laquelle au moins un second paquet de données est transmis dans le cadre de la connexion de communication établie.

5. Procédé selon l'une des revendications précédentes, **caractérisé en ce qu'**au moins un serveur de signalisation communique à un terminal de téléphonie auquel ce serveur de signalisation est affecté, un identifiant de qualité de service ou une information correspondante désignant une qualité de service.

6. Procédé selon l'une des revendications précédentes, **caractérisé en ce qu'**au moins un premier terminal de téléphonie communique à au moins un second terminal de téléphonie un identifiant de qualité de service ou une information correspondante désignant une qualité de service.

7. Procédé selon l'une des revendications précédentes, **caractérisé en ce qu'**au lieu d'au moins une valeur de qualité de service du Differentiated Services Code Point, DSCP, est transmis un identifiant numérique ou alphanumérique à l'aide duquel au moins une valeur de qualité de service à utiliser est déterminée dans un terminal de téléphonie auquel est transmis ou a été transmis un identifiant.

8. Procédé selon l'une des revendications précédentes, **caractérisé en ce qu'**au moins un serveur de signalisation reconnaît, sur la base d'un numéro d'appel composé ou sur la base d'une signalisation particulière, qu'un appel doit être passé avec une priorité particulière, après quoi ce serveur de signalisation communique au terminal de téléphonie qui initie l'appel un identifiant de profil de qualité de service correspondant ou une information correspondante.

9. Procédé selon la revendication 8, **caractérisé en ce que** le terminal de téléphonie détermine, à partir du profil de qualité de service qui lui est communiqué, une valeur de qualité de service à utiliser et l'utilise pour une connexion selon le protocole Real-Time Transport Protocol, RTP.
